# EUROPEAN PATENT SPECIFICATION

(11) **EP 1 518 802 B1**
(45) Date of publication and mention of the grant of the patent: **21.06.2006**
(21) Application number: 04076192.6
(22) Date of filing: 19.04.2004
(51) Int. Cl.: B65G 1/04, A01G 9/14

(54) **Belt conveyor for transporting wheeled plant carriers**
Bandförderer zum Transport von fahrbaren Pflanzenträgern
Convoyeur à bande pour le transport des supports de plantes à roues

(43) Date of publication of application: 30.03.2005
(73) Proprietor: W/M Systems B.V., 2661 EP Bergschenhoek (NL)
(72) Inventor: De Jager, Maarten, 2587 TX Den Haag (NL); Brugman, Thomas Gerardus, 2715 AN Zoetermeer (NL)
(74) Representative: van Westenbrugge, Andries

(56) References cited:
- US-A- 5 355 621

## Description

The present invention relates to a device according to the preamble of claim 1.

US-A-5,355,621 discloses a system for transporting wheeled plant carriers in a greenhouse. The carriers are moved from one aisle of the cultivation area to the next by a sort of a screw conveyor.

In the general prior art a plant carrier is known consisting of a trough or plate, possible provided with openings for the accommodation of plants, such as pot plants. Such a trough or other design of plant carrier has a frame with sets of wheels on it, so that said frame can be moved easily. Such a movement often involves circulation within a limited part of the greenhouse and during such a movement personnel can easily carry out work on the plants if necessary.

Such plant carriers are placed in series one behind the other. The sets of wheels are supported on rails, such as tubular rails. For circulation, the plant carriers are taken out of a series and moved perpendicular to the direction of movement in the series by means of a conveyor, and are added to another series. This removal from a series and placing on a conveyor is performed by means of devices which are not described in further detail.

Such conveyors are currently in the form of, for example, chain conveyors. Tubes are fitted on certain links of the chain and, if those tubes are positioned properly, they lie exactly in line with the rails supporting the wheels of the frames of the plant carriers. In the correct position the plant carriers can roll off the tubular rails onto the conveyor. The same process is carried out at the deposit point, where the tubes fitted on the chain conveyor are placed exactly in line with the tubular rails present there. The positioning of the tubes relative to the tubular rails is achieved by means of the chain drive. The drive motor and its control element are provided with a counter and, owing to the fact that the chains do not slip over the drive gears, the take-up/deposit point can be determined accurately by counting the number of revolutions of the motor. It is aimed to make the circulation proceed as fast as possible. To this end, efforts are made to make the taking up of one of the plant carriers onto the chain conveyor occur at the same time as the depositing of another of the plant carriers from the same chain conveyor. It is important here for the rails mounted on the chains to lie simultaneously exactly in line with both the tubular rails at the take-up position of the first plant carrier and the tubular rails at the deposit position of the second plant carrier.

The use of a chain conveyor has a number of disadvantages. Owing to wear and/or to grease being forced out between the pins and bushes of the chains, it cannot be guaranteed in the long run that the distance between the individual tubes and that between various groups of tubes will be constant (during simultaneous transfer), so that the tubular rails will no longer lie in line with each other. As a result of this, positioning difficulties arise after some time, which leads to faults occurring during the conveyance of the plant carriers. Another problem is the limited length over which such chain conveyors can extend, on account of the abovementioned inaccuracy. This means that with the chain conveyors it is possible only to circulate within a section with limited dimensions. Furthermore, it is necessary to sort plants on carriers according to development, i.e. to move certain plant carriers to a different section. This is not easy to do with chain conveyors. There are also problems with regard to moisture. The links of the chains have a tendency to rust up because of the moisture present in the greenhouses, which disrupts the operation of the chains. This problem is further aggravated by the fact that, if water has recently been added to the plant carrier, some of this water leaks onto the chain during the transfer. It is true that measures have been proposed for preventing this leakage, but in practice they have not proved to be effective.

In order to avoid these problems, the use of roller tracks such as those for roller containers was proposed in the prior art. In this case the rails for transferring the plant carriers are taken upwards and downwards, which is time-consuming. The rollers are also sensitive to moisture. Furthermore, the carrier has to be supported during the conveyance, with the result that the carrier has to be of a heavier design. During this conveyance the carrier is unstable because of the low width of the trough supported by the rollers.

The object of the present invention is to avoid the disadvantages described above and to ensure accurate positioning of the plant carrier in all circumstances, in particular at the deposit point.

This object is realised with the device described above in that said carrier and conveyor comprise a conveyor belt of a belt conveyor, which conveyor belt is provided with retaining means for retaining said plant carrier transversely to the direction of movement of said plant carrier, and that said regulating means comprise sensors which react at the deposit point to the presence/absence of a plant carrier.

According to the present invention, a belt conveyor is used instead of a chain conveyor with tubes. On such a belt conveyor there are no preferred positions for the plant carrier on the conveyor belt. In other words, the plant carrier can be rolled onto the conveyor belt in any arbitrary position. This rolling is possible because the belt surface in principle does not constitute any hindrance for the wheels of the plant carrier.

The correct deposit point is determined by sensors, which are fitted on the frame or at any other fixed point in the environment of the device. As soon as the conveyor belt with the carrier placed on it has reached a position at which the plant carrier is to be deposited, the drive of the conveyor belt is interrupted, and the carrier can be removed from the conveyor belt and, because of its accurate positioning rolls directly onto the (tubular) rails present there. If during the conveyance slippage occurs in any way between the wheels of the plant carrier and the conveyor belt or between the conveyor belt and the drive roller, this does not matter at all, because it is only the position of the plant carrier that activates the sensors present and in this way stops the movement of the conveyor belt. Furthermore, elongation in the conveyor belt or retensioning of the belt have no effect whatsoever on the proper functioning of the belt.

The use of a belt conveyor means that it is possible in a simple manner to make the plant carrier cover much greater distances, with the result that the circulation system can be substantially changed and optimized. As indicated above, this makes it possible to move plant carriers between different sections in the greenhouse lying at a considerable distance from each other. Furthermore, the material of a conveyor belt in principle is not sensitive to the effects of moisture and substances dissolved in moisture, with the result that the operational reliability is greatly improved, also in the long term. Fragile parts for the drive of the conveyor belt are situated underneath the conveyor belt and are less exposed to moisture. Any elongation or other changes in the properties are of no significance. So long as the conveyor belt part supporting the plant carrier moves, the plant carrier will be moved. Furthermore, it is always possible to move the plant carrier from the rails onto the conveyor belt and to place it in front of the rails in such a way that it can be moved from the conveyor belt onto those rails.

In order to position the plant carrier in a secure way on the conveyor belt part and prevent it from rolling off that part, according to an advantageous embodiment of the invention, the effective run of the conveyor belt is placed at a slight angle to the horizontal. In order to prevent the plant carrier from then running off the conveyor belt, an elevation is provided on the lowest point of the conveyor belt. This elevation is such that during a normal movement the wheels of the plant carrier will not be able to move over it. However, if those wheels are moving at a certain speed, for example when the plant carrier is being moved onto the conveyor belt, or if a certain force is used, said wheels can move without any problem over the "threshold" thus formed. It is, however, also possible to place the conveyor belt horizontally and to provide two elevations ("thresholds"), between which the plant carrier is retained, on the conveyor belt.

As indicated above, it is possible to use considerably greater lengths than those in the prior art for moving the plant carriers. A minimum length of approximately 15 metres is mentioned as an example, but very much greater lengths are possible in practice. In the case of such greater lengths it is possible to provide two belt conveyors adjacent to each other. The plant carrier is transferred "automatically" from the one conveyor belt to the other conveyor belt. Speed differences do not matter because slippage can occur at any point.

According to a preferred embodiment of the present invention, the drive motor of the conveyor belt has a control element which both near the take-up point and at the deposit point gradually reduces the speed of the movement of the conveyor belt and/or gradually accelerates it again when it is starting up, since a number of plant carriers can be present on the conveyor belt, particularly in the case of greater lengths. Such an accelerating/slowing down movement can be achieved either with the sensors described above or with the aid of a counter control, which is, for example, of a resetting type, in other words it learns on the basis of an earlier stopping point where the next stopping point is going to be. Any inaccuracies occurring are not important, because the final step of bringing the conveyor belt to a standstill at the deposit point is determined by the sensors described earlier.

The invention also relates to an assembly, comprising a combination of the device described above and the plant carriers. As already indicated, the carrying element for the plants can comprise a trough (substrate propagation), a carrier provided with openings for pot plants, or any other imaginable construction. A very large number of such troughs can be placed against each other as a series in a section.

For purposes of the lateral guidance, a carrier is supported on a rail with control wheels, which are disposed in pairs opposite each other with their axles at a mutually opposing angle to the horizontal.

In order to extend the service life of the wheels as much as possible and prevent damage to the conveyor belt as far as possible, it is proposed according to an advantageous embodiment of the invention that the wheel axle of each of the wheels is provided with a further running surface with an angle relative to the wheel axle that is such that the running surface is ultimately horizontal again and line contact occurs. If sets of wheels situated opposite each other are used, one of the sets of wheels is preferably provided with the construction described above, while the other set of wheels is a simple horizontal roller. In this way distance changes between the rails along which the wheels are running can be absorbed.

The invention also relates to a method for use of the above assembly. This method includes the steps of selecting plants placed on an elongated plant carrier, comprising the removal of a first plant carrier from a first series, moving said first plant carrier from said first series in a first direction perpendicular to said first series over a distance 'a', moving said first plant carrier into a second series, the removal of a second plant carrier from said first series, moving said second plant carrier from said first series in said first direction over a distance of less than 'a', and moving said second plant carrier into a third series situated at a distance from said second series, the distance 'a' being greater than 15 m.

The invention will be explained in greater detail below with reference to an exemplary embodiment illustrated in the drawing, in which:
Fig. 1 shows a plant carrier according to the invention in diagrammatic view;
Fig. 2 shows a plant carrier according to Fig. 1 placed on a conveyor belt according to the invention;
Fig. 3 shows diagrammatically in top view circulation of a number of plant carriers; and
Fig. 4 shows a wheel used in the case of the plant carrier according to the invention.

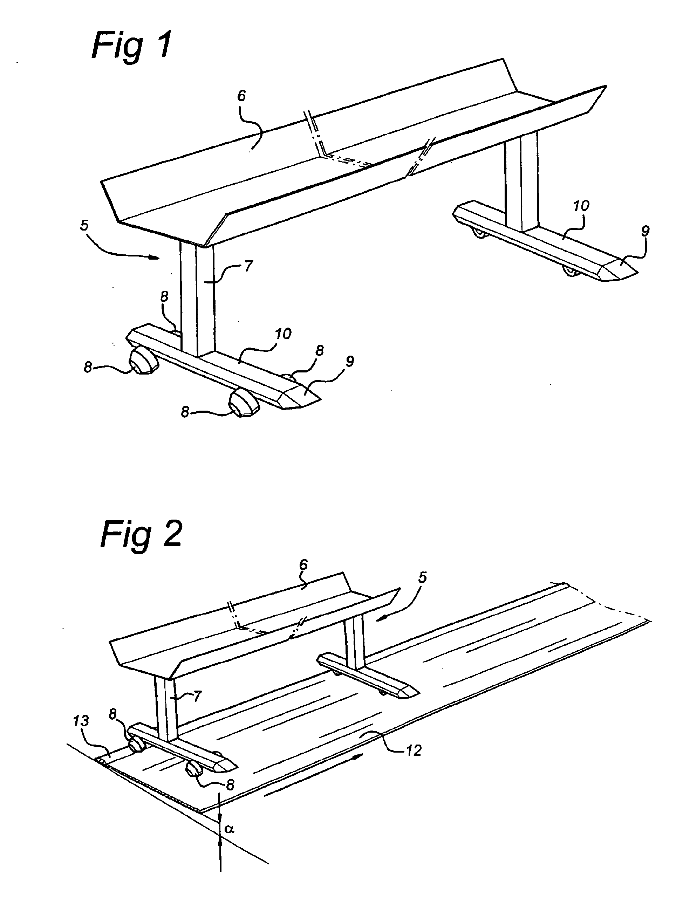

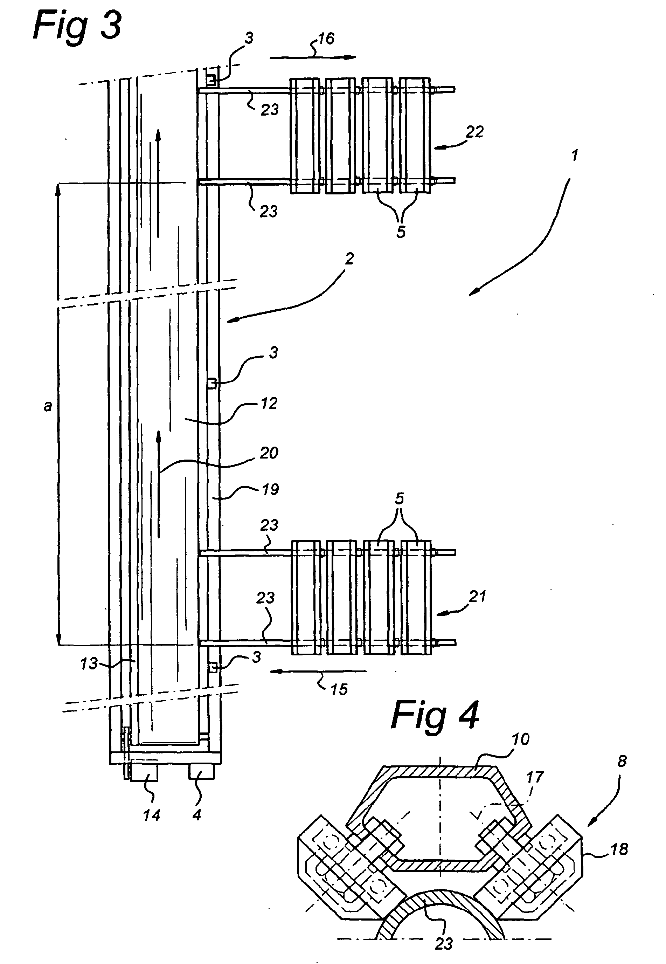

A plant carrier is shown in its entirety by 5 in Fig. 1. This plant carrier is composed of a carrying element 6, which is shown in trough form in the present example. It should be understood that other carriers can be used. This trough rests upon a frame 7, which is provided with wheel bars 10, which are provided near their free ends with a tapering (locating) part 9. Wheels 8 are present, making movement of the plant carrier possible. Such plant carriers are placed in large numbers alongside each other in a greenhouse, as shown very diagrammatically in Fig. 3. Series 21 and 22 respectively are produced in this way. The wheels in this case move along (tubular) rails 23. The plant carrier can be moved along the rails mechanically or by hand.

As shown in Fig. 3, the plant carriers from such series 21, 22 are circulated. This can be done for all kinds of reasons, one of which is so that working personnel can carry out work on or check the condition of the plants in question. It may also be necessary to place them in a different position on account of the incidence of light, growing conditions, wider spacing, and so forth.

Fig. 2 shows a conveyor belt 12, which is placed at an angle α of a number of degrees relative to the horizontal. A thickening edge 13 is provided on the lowest part. The thickening edge is such that during movement the wheels 8 pass easily over it, but, on the other hand, in a more or less static state the wheels do not move over it. In Fig. 2 a plant carrier 5 has been placed on conveyor belt 12 and is resting with the wheel furthest to the left against the elevation 13 and cannot move over it. If desired, two elevations 13 may be provided at a distance from each other on the conveyor belt, in which case the conveyor belt surface can be placed horizontally.

More details of the belt conveyor are shown in Fig. 3. The conveyor is provided with a diagrammatically indicated drive motor 14. Sensors 3 are provided on the frame 19 of the belt conveyor. The direction of movement is indicated by 20. The distance which such a conveyor belt moves is at least 7.5 metres, and this length is indicated by 'a'.

If plant carriers have to be selected, according to the present invention one of the plant carriers from series 21 is moved in the direction of arrow 15. The plant carriers move along rails 23 until they are near conveyor belt 12. In the example shown here the elevation 13 is on the left-hand side, so that this obstacle does not have to be negotiated when the carrier 5 is travelling onto the conveyor belt 12. The carrier then goes into the position shown in Fig. 2. At that point a movement in the direction of arrow 20 is performed by motor 14, controlled by a control element 4. As soon as the plant carrier 5 has reached the desired deposit position, its presence is detected by a sensor 3. Thereafter the drive of the belt conveyor is interrupted by switching off motor 14. This switching off may be a gradual process if desired. The moment of switching off in that case is selected either by the presence of further sensors, or on the basis of the fact that during the run-down the plant carrier completes a further fixed distance, or it is selected by means of a counting mechanism in the control element, by means of which a slow-down occurs in good time. There are also further possibilities. If the plant carrier has reached the correct position for being deposited, it is moved off the conveyor belt 12 in one way or another in the direction of arrow 16, and a new series 22 can be formed. This series may have different characteristics (mutual spacing) from those of series 21. During the movement with the belt conveyor the plant carrier can have work carried out on it.

During the conveyance along belt conveyor 2 it is possible temporarily to slow down movement of the carrier or to interrupt it for carrying out work.

One of the wheels 8 is shown in Fig. 4. The wheel axle 17 extends at an angle to the horizontal, while the running face is provided with an opposing angle, so that the wheel ultimately rests horizontally on the surface of conveyor belt 12 or on rails 23. This produces line contact. The opposite wheel is in the form of a roller, so that it is not essential for the rails along which the plant carrier 6 runs to be accurately parallel. Slide blocks can be used instead of rollers.

With the present invention it is no longer necessary to provide special measures for transferring the plant carrier from rails 23 to the conveyor, since a carrying surface 12 is always present to receive the wheels. Because the depositing of the plant carriers is carried out on the basis of a stationary sensor, it can be guaranteed with very great accuracy and in all circumstances that the wheels will be situated precisely in the correct position for the rails of series 23.

After the above description has been read, variants and further applications lying within the scope of the appended claims will immediately spring to mind for the person skilled in the art.

## Claims

1. Device for taking up, conveying and depositing plant carriers (5), comprising a carrier (12) for taking up wheels of the plant carrier and a conveyor for moving said carrier, and also regulating means (3, 4) for determining the deposit point of said plant carrier, **characterized in that** said carrier and conveyor comprise a conveyor belt (12) of a belt conveyor, said conveyor belt being provided with retaining means (13) for retaining said plant carrier transversely to the direction of movement (20) of said plant carrier, and **in that** said regulating means comprise sensors (3) which react at the deposit point (16) to the presence/absence of a plant carrier.

2. Device according to Claim 1, wherein said retaining means comprise placing said conveyor belt at a slight angle (α) perpendicular to the direction of movement (20) and providing an elevation (13) in the longitudinal direction of said conveyor belt at its lowest point.

3. Device according to one of the preceding claims, wherein said belt conveyor has a length greater than 15 m.

4. Device according to one of the preceding claims, wherein the motor (14) of said belt conveyor and said regulating means (4) are provided with interacting counting means for determining the position of said conveyor belt relative to said frame.

5. Device according to Claim 4, wherein on the basis of said counting means said regulating means (4) are designed to reduce the speed of said conveyor belt near a deposit point (16) for plant carriers.

6. Assembly comprising a device (2) for conveying plant carriers (5), and also plant carriers (5), wherein said device comprises a device according to one of the preceding claims.

7. Device according to Claim 6, wherein said plant carrier comprises an elongated carrying element (6) under which wheel bars (10) are provided, the longitudinal ends each being provided with a set of wheels.

8. Assembly according to Claim 7, wherein said carrying element comprises accommodation places for plants.

9. Assembly according to one of Claims 7 and 8, wherein said carrying element comprises a trough.

10. Assembly according to one of Claims 6 - 8, wherein said plant carrier comprises wheels, the wheel axle (17) of said wheels being placed at an angle to the horizontal in the in-use position, and the running face (18) of the wheel being provided at such an angle relative to the wheel axle that in the in-use position the contact surface with the carrier (12) is substantially horizontal.

11. Method for selecting plants placed on an elongated plant carrier, using the assembly according to claim 6 and comprising the removal of a first plant carrier from a first series, moving said first plant carrier from said first series in a first direction perpendicular to said first series over a distance 'a', moving said first plant carrier into a second series, the removal of a second plant carrier from said first series, the moving of said second plant carrier from said first series in said first direction over a distance of less than the distance 'a', and moving said second plant carrier into a third series situated at a distance from said second series, said distance (a) being greater than 15 m.

## Patentansprüche

1. Vorrichtung zum Aufnehmen, Transportieren und Abstellen von Pflanzenträgern (5), umfassend einen Träger (12) zur Aufnahme von Rädern des Pflanzenträgers und einen Förderer zum Bewegen des Trägers, und ebenso Verstellmittel (3, 4) zur Bestimmung des Abstellpunkts des Pflanzenträgers, **dadurch gekennzeichnet, dass** der Träger und der Förderer ein Förderband (12) eines Bandförderers umfassen, wobei das Förderband mit Haltemitteln (13) versehen ist, um den Pflanzenträger quer zur Bewegungsrichtung (20) des Pflanzenträgers zu halten, und dass die Verstellmittel Sensoren (3) umfassen, die an dem Abstellpunkt (16) auf die Anwesenheit/Abwesenheit eines Pflanzenträgers reagieren.

2. Vorrichtung nach Anspruch 1, wobei die Haltemittel die Platzierung des Förderbands in einem geringen Winkel (α) senkrecht zu der Bewegungsrichtung (20) und die Bereitstellung einer Erhebung (13) in der Längsrichtung des Förderbands an seinem tiefsten Punkt umfassen.

3. Vorrichtung nach einem der vorhergehenden Ansprüche, wobei der Bandförderer eine Länge größer als 15 m hat.

4. Vorrichtung nach einem der vorhergehenden Ansprüche, wobei der Motor (14) des Bandförderers und die Verstellmittel (4) mit in Wechselwirkung stehenden Zählmitteln versehen sind zur Erfassung der Position des Förderbands relativ zu dem Rahmen.

5. Vorrichtung nach Anspruch 4, wobei die Verstellmittel (4) auf der Grundlage der Zählmittel ausgebildet sind, um die Geschwindigkeit des Förderbands in der Nähe eines Abstellpunktes (16) für Pflanzenträger zu verringern.

6. Anordnung umfassend eine Vorrichtung zum Transportieren von Pflanzenträgern (5) und ebenso Pflanzenträgern (5), wobei die Vorrichtung eine Vorrichtung nach einem der vorhergehenden Ansprüche umfasst.

7. Vorrichtung nach Anspruch 6, wobei der Pflanzenträger ein längliches Trageelement (6) umfasst, unter dem Radstangen (10) vorgesehen sind, deren Enden in Richtung der Längsachse je mit einem Satz Räder versehen sind.

8. Anordnung nach Anspruch 7, wobei das Trageelement Aufnahmeplätze für Pflanzen umfasst.

9. Anordnung nach einem der Ansprüche 7 und 8, wobei das Trageelement eine Wanne umfasst.

10. Anordnung nach einem der Ansprüche 6 bis 8, wobei der Pflanzenträger Räder umfasst, deren Radachse (17) in einem Winkel zur Waagerechten in der Gebrauchsstellung angeordnet ist, und die Lauffläche des Rades in einem solchen Winkel relativ zu der Radachse vorgesehen ist, dass in der Gebrauchsstellung die Kontaktoberfläche mit dem Träger (12) im Wesentlichen waagerecht ist.

11. Verfahren zur Auswahl von Pflanzen, die in einem länglichen Pflanzenträger platziert sind, unter Nutzung der Anordnung gemäß Anspruch 6 und umfassend die Entnahme eines ersten Pflanzenträgers aus einer ersten Reihe, Bewegen des ersten Pflanzenträgers von der ersten Reihe entlang einer ersten Richtung senkrecht zu der ersten Reihe über eine Entfernung 'a', Bewegen des ersten Pflanzenträgers in eine zweite Reihe hinein, die Entnahme eines zweiten Pflanzenträgers aus der ersten Reihe, das Bewegen des zweiten Pflanzenträgers von der ersten Reihe in die erste Richtung über eine Entfernung, die geringer als die Entfernung 'a' ist, und Bewegen des zweiten Pflanzenträgers in eine dritte Reihe hinein, die sich in einem Abstand von der zweiten Reihe befindet, die Entfernung 'a' ist dabei größer als 15m.

## Revendications

1. Dispositif permettant de retenir, de transporter et de déposer des supports de plantes (5), comprenant un transporteur (12) adapté pour retenir les roues du support de plantes et un convoyeur pour déplacer ledit support, ainsi que des moyens de régulation (3, 4) pour déterminer le point de dépôt dudit support de plantes, **caractérisé en ce que** lesdits transporteur et convoyeur comprennent une bande de convoyeur (12) d'un convoyeur à bande, ladite bande de convoyeur étant pourvue de moyens de retenue (13) pour maintenir ledit support de plantes transversalement à la direction de déplacement (20) dudit support de plantes, et **en ce que** lesdits moyens de régulation comprennent des capteurs (3) qui réagissent à la présence/absence d'un support de plantes au niveau du point de dépôt (16).

2. Dispositif selon la revendication 1, dans lequel lesdits moyens de retenue comprennent des moyens destinés à placer ladite bande de convoyeur à un angle faible (α) perpendiculairement à la direction de déplacement (20) et à produire une élévation (13) dans la direction longitudinale de ladite bande de convoyeur, en son point le plus bas.

3. Dispositif selon l'une des précédentes revendications, dans lequel ledit convoyeur à bande a une longueur supérieure à 15 m.

4. Dispositif selon l'une des précédentes revendications, dans lequel le moteur (14) dudit convoyeur à bande et lesdits moyens de régulation (4) sont équipés de moyens de comptage en interaction permettant de déterminer la position de ladite bande de convoyeur par rapport à ladite armature.

5. Dispositif selon la revendication 4, dans lequel lesdits moyens de régulation (4) sont conçus pour réduire la vitesse de ladite bande de convoyeur à proximité d'un point de dépôt (16) pour des supports de plantes, sur la base desdits moyens de comptage.

6. Ensemble comprenant un dispositif (2) pour transporter des supports de plantes (5), ainsi que des supports de plantes (5), dans lequel ledit dispositif comprend un dispositif selon l'une des précédentes revendications.

7. Dispositif selon la revendication 6, dans lequel ledit support de plantes comprend un élément de support allongé (6) sous lequel sont montés des barres à roues (10) dont les extrémités longitudinales sont chacune pourvues d'un jeu de roues.

8. Ensemble selon la revendication 7, dans lequel ledit élément de support comprend des emplacements de réception pour des plantes.

9. Ensemble selon l'une des revendications 7 et 8, dans lequel ledit élément de support comprend un bac.

10. Ensemble selon l'une des revendications 6 à 8, dans lequel ledit support de plantes comprend des roues, l'axe de roue (17) desdites roues étant placé à un certain angle par rapport à l'horizontale dans la position d'utilisation, et la surface de roulement (18) de la roue étant prévue à un angle par rapport à l'axe de roue tel que, dans la position d'utilisation, la surface de contact avec le transporteur (12) soit sensiblement horizontale.

11. Procédé permettant de sélectionner des plantes placées sur un support de plantes allongé, en lisant l'ensemble selon la revendication 6 et comprenant les étapes consistant à retirer un premier support de plantes d'une première série, à déplacer ledit premier support de plantes depuis ladite première série dans une première direction perpendiculaire à ladite première série sur une distance "a", à déplacer ledit premier support de plantes jusqu'à une deuxième série, à retirer un deuxième support de plantes de ladite première série, à déplacer ledit deuxième support de plantes depuis ladite première série dans ladite première direction sur une distance inférieure à la distance "a" et à déplacer ledit deuxième support de plantes jusqu'à une troisième série située à distance de ladite deuxième série, ladite distance étant supérieure à 15 m.
